(19) Europäisches Patentamt

European Patent Office

Office européen des brevets

(11) **EP 1 402 198 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(21) Anmeldenummer: **02729751.4**

(22) Anmeldetag: **11.06.2002**

(51) Int Cl.:
*F16G 1/14* (2006.01)    *F16G 5/12* (2006.01)
*C08F 210/16* (2006.01)

(86) Internationale Anmeldenummer:
**PCT/CH2002/000310**

(87) Internationale Veröffentlichungsnummer:
**WO 2003/001081 (03.01.2003 Gazette 2003/01)**

(54) **MONOLITHISCHER RIEMEN MIT ETHYLEN-ALPHA OLEFIN-COPOLYMEREN**

MONOLITHIC BELTS CONTAINING ETHYLENE-ALPHA-OLEFIN COPOLYMERS

COURROIE MONOLITHIQUE COMPRENANT DES COPOLYMERES ETHYLENE-ALPHA OLEFINE

(84) Benannte Vertragsstaaten:
**AT BE CH CY DE DK ES FI FR GB GR IE IT LI LU MC NL PT SE TR**

(30) Priorität: **21.06.2001 CH 113401**

(43) Veröffentlichungstag der Anmeldung:
**31.03.2004 Patentblatt 2004/14**

(73) Patentinhaber: **Habasit AG**
**4153 Reinach (CH)**

(72) Erfinder:
- **VOGT, Jürg**
  **CH-6006 Luzern (CH)**
- **TOGGENBURGER, Willi**
  **Ch-4153 Reinach (CH)**

(74) Vertreter: **Bollhalder, Renato et al**
**A. Braun**
**Braun Héritier Eschmann AG,**
**Holbeinstrasse 36-38**
**4051 Basel (CH)**

(56) Entgegenhaltungen:
**EP-A- 0 129 414        EP-A- 0 922 711**
**EP-A- 1 038 917        EP-A- 1 186 797**
**WO-A-00/26268          WO-A-97/38019**
**US-A- 4 868 029**

- **PATENT ABSTRACTS OF JAPAN vol. 1997, no. 11, 28. November 1997 (1997-11-28) & JP 09 176402 A (MITSUI PETROCHEM IND LTD), 8. Juli 1997 (1997-07-08)**

**Beschreibung**

Die vorliegende Erfindung betrifft monolithische Riemen, insbesondere monolithische Transportbänder und Antriebsriemen.

Riemen können verschiedene Funktionen gleichzeitig erfüllen: Sie müssen mechanische Kräfte aufnehmen, um Transportgut zu fördern oder eine Welle oder ein Rad anzutreiben, und sie müssen eine Oberfläche aufweisen, welche spezifischen Anforderungen (z.B. Reibwert, Abriebfestigkeit, Struktur) genügt. Oft werden die unterschiedlichen Funktionen durch verschiedene Schichten des Riemens wahrgenommen. Beispielsweise sorgt ein Gewebe für die Übertragung der Kräfte und eine Kunststoffbeschichtung für die geforderten Oberflächeneigenschaften.

Beispiele für Riemen sind Transportbänder und Antriebsriemen.

Bei einer besonderen Klasse von Riemen oder Transportbändern werden alle Funktion von nur einer Materialschicht wahrgenommen. Man spricht in diesem Fall von "monolithischen" Riemen oder Transportbändern. Um die geforderten Eigenschaften erreichen zu können, werden sehr hochwertige und teure thermoplastische Elastomere verwendet. Diese müssen sich insbesondere durch geringe Kriechneigung auszeichnen; ein Material mit hoher Kriechgeschwindigkeit würde die Verwendung eines Gewebes erfordern, um die Längung eines daraus hergestellten Riemens oder Transportbandes unter ständiger Zugbelastung zu verhindern. Bei zu grosser Steifigkeit des Materials würde ein Hang zur Rissbildung im fertigen Riemen oder Transportband resultieren.

Allgemein werden für monolithische Riemen oder Transportbänder thermoplastische Polyurethan-Elastomere (TPE-U) und thermoplastische Polyester-Elastomere (TPE-E) eingesetzt. Besondere Ausführungsformen derartiger Transportbänder können auch rückseitig aufkaschierte Gewebe, Vliese oder Verstärkungen durch unidirektionale Faserbündel in Längsrichtung des Bandes aufweisen.

Der analoge Sachverhalt existiert bei Antriebsriemen. Auch hier werden die Kräfte häufig durch eine Zugschicht (ein Gewebe oder ein hochsteifes Kunststoff-Band) übertragen und die Oberflächeneigenschaften durch eine Reibschicht (häufig Gummi) erzielt.

Antriebsriemen mit einer runden, trapezförmigen oder polygonförmigen Querschnittsfläche werden unter dem Begriff Profilriemen zusammen gefasst. Bei dieser Klasse von Antriebsriemen werden analog zum oben erwähnten Beispiel häufig alle Funktionen durch ein einziges Material übernommen. Es handelt sich dann um einen "monolithischen" Profilriemen. Auch hier kommen thermoplastische Polyurethan-Elastomere (TPE-U) oder thermoplastische Polyester-Elastomere (TPE-E) zum Einsatz. Es existieren spezielle Ausführungsformen mit Verstärkungen durch unidirektionale Faserbündel.

Die erwähnten thermoplastischen Elastomere TPE-E und TPE-U sind relativ teure Kunststoffe. Sie weisen zudem den Nachteil auf, dass nur ganz spezielle Typen für den Kontakt mit Lebensmitteln zugelassen sind. Zur Herstellung von Endverbindungen sind hohe Fügetemperaturen notwendig (> 180°C). TPE-U weisen zudem häufig den Nachteil auf, dass sie bei erhöhter Temperatur leicht hydrolysiert werden können.

In der WO-A-00/26268 werden Interpolymere aus Ethylen/$\alpha$-Olefin/fakulativem Dien offenbart, darunter auch binäre Ethylen-$\alpha$-Olefin-Copolymere wie etwa Ethylen-$\alpha$-Octen-Copolymer mit einem $M_w/M_n$-Verhältnis von mindestens 2,3. Es wird die Eignung dieser Interpolymere für die Herstellung einer Vielzahl von Artikel angetönt, darunter für Riemen. Die Eignung dieser Interpolymere für monolithische Riemen wird aber weder offenbart noch nahegelegt.

In der EP-A-0 922 711 werden Katalysatoren zur Polymerisierung von Olefinen offenbart, darunter auch solche mit Aluminoxan als Kokatalysatoren. Die Katalysatoren werden als geeignet zur Herstellung von u.a. Ethylen/$\alpha$-Olefin-Copolymeren mit $M_w/M_n$ von 2 bis 4,6, bevorzugt 2,6 bis 4,2 beschrieben. Es wird erwähnt, dass die mittels dieser Katalysatoren hergestellten Polymere zur Herstellung von Artikeln wie etwa Riemen und Reifenbestandteilen, darunter Reifengurte, geeignet sind. Die Eignung dieser Copolymere für monolithische Riemen wird aber weder offenbart noch nahegelegt.

In der WO-A-97/38019 werden Polyolefin-Elastomere beschrieben, darunter auch Ethylen-$\alpha$-Olefin-Elastomere, sowie Katalysatoren und Kokatalysatoren zu ihrer Herstellung. Diese Elastomere sollen für die Herstellung einer Vielzahl von Produkten, darunter Riemen, so etwa Kraftübertragungsriemen, Keilriemen, Synchronriemen, Förderbänder und industrielle Flachriemen nützlich sein.

In der Zusammenfassung von JP-A-09/176402 wird ein Riemen offenbart, der aus einem Ethylen-$\alpha$-Olefin-Copolymer-Gummi hergestellt wird. Bevorzugt enthält der Riemen zwei Typen von Copolymer-Gummis mit unterschiedlicher Viskosität.

Aufgabe der Erfindung ist die Entwicklung von monolithischen Riemen, insbesondere von monolithischen Transportbändern und Profilriemen, welche die oben erwähnten Nachteile nicht aufweisen.

Die Aufgabe wird erfindungsgemäss durch die Riemen nach Anspruch 1 gelöst. Die in den Ansprüchen 1 bis 3 angegebenen Parameterbereiche für $M_w : M_n$ (siehe unten) können insbesondere durch die Herstellung der Copolymere mittels "Single-Site"-Katalysatoren bewirkt sein.

Es wurde herausgefunden, dass durch die Verwendung von solchen Copolymeren aus Ethylen und $\alpha$-Olefinen monolithische Riemen, insbesondere monolithische Transportbänder und Antriebsriemen, hergestellt werden können, welche vergleichbare mechanische Eigenschaften aufweisen wie bei der Verwendung von TPE-U oder TPE-E. Dies ist deshalb erstaunlich, weil für monolithische Riemen sehr hohe Ansprüche an das Kriechverhalten und den Speichermodul E' des Materials gestellt werden müssen, und die Mehrzahl der gebräuchlichen Polyolefine diesen Ansprüchen bekanntermassen nicht genügen. Für die erfindungsgemäss einzusetzenden Ethylen-α-Olefin-Copolymere wurden die Kriechgeschwindigkeit und der Speichermodul E' nach Kenntnis der Anmelderin aber bislang nicht untersucht, und sie sind ohne Durchführung der entsprechenden gezielten Messung an ihnen auch nicht erkennbar. Erst die Erfinder der hiesigen Anmeldung haben entdeckt, dass Ethylen-α-Olefin-Copolymere gleichzeitig eine niedrige Kriechgeschwindigkeit und einen niedrigen Speichermodul E' aufweisen, was es ihnen ermögliche, monolithische Riemen, z.B. Transportbänder oder monolithische Antriebsriemen, aus ihnen herzustellen. Die erfindungsgemäss einzusetzenden Ethylen-α-Olefin-Copolymere sind unvernetzt und sind daher keine Elastomere oder Gummis.

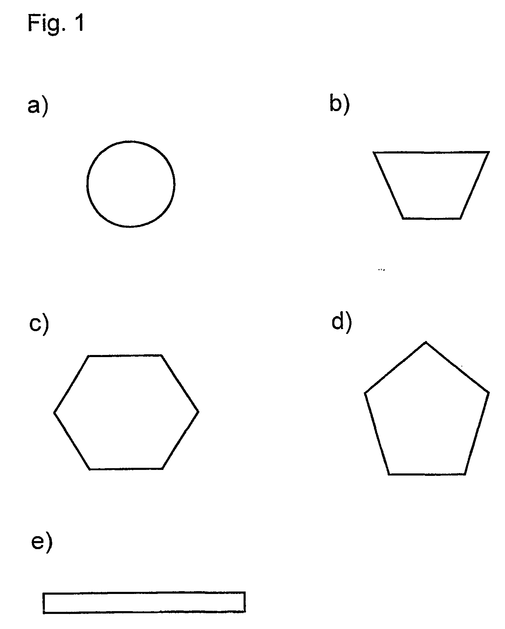

Figur 1 zeigt verschiedene mögliche Querschnitte von erfindungsgemässen Antriebsriemen in Form von Profilriemen, nämlich a) Rundriemen, b) Keilriemen, c) Doppelkeilriemen, d) Spitzkeilriemen und e) Flachriemen.

Der Begriff "monolithisch" bedeutet im Rahmen der vorliegenden Anmeldung, dass der Riemen kein Gewebe enthält. In einer bevorzugten Ausführungsform kann ein erfindungsgemässes Transportband aber trotzdem noch zusätzlich einseitig ein Gewebe, Vlies oder Gelege aufgebracht sein.

Der Begriff "Riemen" bedeutet im Rahmen der vorliegenden Anmeldung jeden Riemen, der zur Übertragung von Zugkräften von einem Antrieb auf eine anzutreibende Welle, Rad oder Hebel oder zur Beförderung eines Gutes dient. Beispiele für Riemen sind Transmissionsriemen, Profilriemen (z.B. Keilriemen) und Transportbänder.

Der Begriff "α-Olefin" hat die in der Technik der Polyolefine übliche Bedeutung, d.h. er bezeichnet vorzugsweise unverzweigte Kohlenwasserstoffe mit einer terminalen C=C-Doppelbindung. Im Rahmen der vorliegenden Anmeldung umfasst der Begriff "α-Olefin" solche Kohlenwasserstoffe mit 3 bis 12 Kohlenstoffatomen, bevorzugt 5 bis 10 Kohlenstoffatomen, besonders bevorzugt 8 Kohlenstoffatomen. Beispiele für solche α-Olefine sind 1-Propen, 1-Buten, 1-Penten, 1-Hexen und 1-Octen; am meisten bevorzugt ist 1-Octen.

Die Begriffe "Gewichtsmittel" $M_w$ und "Zahlenmittel" $M_n$ haben die in der Technik der Polyolefine übliche Bedeutung (vgl. z.B. Saechtling, Kunststofftaschenbuch 27. Ausgabe, Carl Hanser Verlag München, Seite 17 f.):

$$M_w \;=\; \frac{\sum n_i M_i}{\sum n_i} \quad , \quad M_n \;=\; \frac{\sum n_i M_i^{\,2}}{\sum n_i M_i}$$

$M_w$ und $M_n$ können nach in der Technik der Polymercharakterisierung üblichen Verfahren durch beispielsweise chromatographische Trennung einer Probe des Copolymers mittels Gelpermeationschromatographie und gleichzeitiger Analyse der so erhaltenen Fraktionen i mittels Streulichtphotometrie ($M_i$, $n_i$) bestimmt werden. Ein Beispiel für eine komplette solche Messanordnung, mit der diese Parameter bestimmt werden können, ist die Gelpermeationschromatographie-Anlage mit Merck L6000 Pumpe, Trennsäule von Polymer Laboratories mit $10^6$ Å Ausschlussgrenze, Streulichtphotometer DAWN DSP von Wyatt, Lichtquelle He/Ne-Laser von 632,8 nm.

Copolymere, die in den erfindungsgemässen Riemen eingesetzt werden, weisen ein nach obigem Verfahren gemessenes Verhältnis $M_w : M_n$ auf, das von etwa 5,0 : 1 bis etwa 1,5 : 1 reicht. Vorzugsweise beträgt dieser Wert für die Copolymere in den erfindungsgemässen Bändern etwa 3,5 : 1 bis etwa 1,5 : 1; besonders bevorzugt etwa 2,5 : 1 bis etwa 1,5 : 1.

Die erfindungsgemäss einsetzbaren Copolymere können bei 30°C typisch eine Kriechgeschwindigkeit $v_k$ (gemessen in Einheiten von 1 / log(min)) von etwa 0,002 bis etwa 0,005, bevorzugt von etwa 0,0025 bis etwa 0,0035, besonders bevorzugt von etwa 0,003 aufweisen, wobei die Definition und Messmethode der Kriechgeschwindigkeit $V_k$ wie in Beispiel 1 beschrieben ist. Bei 40°C kann diese Kriechgeschwindigkeit typisch etwa 0,004 bis etwa 0,008, bevorzugt etwa 0,005 bis etwa 0,007 und besonders bevorzugt etwa 0,006 betragen; bei 50°C kann sie typisch etwa 0,005 bis etwa 0,02, bevorzugt etwa 0,0075 bis etwa 0,015 und besonders bevorzugt etwa 0,012 betragen.

Die erfindungsgemäss einsetzbaren Copolymere können bei 30°C typisch einen Speichermodul E' von etwa 50 MPa bis etwa 200 MPa, bevorzugt von etwa 75 MPa bis etwa 125 MPa, besonders bevorzugt von etwa 100 MPa aufweisen, wobei die Definition und Messmethode des Speichermoduls E' wie in Beispiel 2 beschrieben ist. Bei 40°C kann dieser Speichermodul typisch etwa 40 MPa bis etwa 120 MPa, bevorzugt etwa 60 MPa bis etwa 100 MPa und besonders bevorzugt etwa 80 MPa betragen; bei 50°C kann er typisch etwa 30 MPa bis etwa 100 MPa, bevorzugt etwa 40 MPa bis etwa 80 MPa und besonders bevorzugt etwa 60 MPa betragen.

Die Copolymere können durch "Single-Site"-Katalysatoren hergestellt werden. Der "Single Site"-Katalysator ist ein in der Technik der Polyolefine seit etwa 10 Jahren üblicher Katalysator, der aus einer Mischung eines Metallocens eines Metalls der Gruppe IVa der Übergangselemente [z.B. Bis(cyclopentadienyl)dimethylzirkonium, aber auch Metallocene mit nur einem Cyclopentadienylligand und allenfalls weiteren Liganden] und einem Kokatalysator bestehen, wobei es die Funktion des Kokatalysators ist, den Metallocen-Katalysator während der Polymerisationsreaktion in den einfach positiv geladenen Zustand zu überführen. Der Kokatalysator bildet dabei ein Gegenanion, das nicht nukleophil ist und nicht an das Metallocen koordiniert. Ein Beispiel für den Kokatalysator ist z.B. polymeres Methylaluminoxan [MAO, $-(Me-Al-O)_n-$], das in einer Menge dergestalt verwendet wird, dass ein Al:Metallocen-Molverhältnis etwa 100:1 bis etwa 10000:1 entsteht. Ein weiteres Beispiel für den Kokatalysator sind Borane mit elektronegativen Substituenten wie etwa polyfluorierten Aromaten.

Beispiele für "Single Site"-Katalysatoren sind die in US-A-5 026 798 beschriebenen Monocyclopentadienyl-Metallkatalysatoren, die in US-A-5 132 380 beschriebenen Monocyclopentadienyl-Metallkatalysatoren und die in EP-A-0 416 815 beschriebenen "Constrained Geometry" Katalysatoren, mit den dort jeweils offenbarten Kokatalysatoren. Diese Dokumente sind durch Bezugnahme eingeschlossen.

Bevorzugte Beispiele für solche Katalysatoren sind die von Dow Chemical unter dem Namen INSITE ® und die von ExxonMobil Chemical unter dem Namen EXXPOL ® bekannten "Single-Site"-Katalysatoren. Ein besonders bevorzugtes Beispiel für einen solchen Katalysator ist (tert-Butylamido)dimethyl(tetramethyl-$\eta^5$-cyclopentadienyl)silan-titandimethyl + Tris(pentafluorphenyl)boran im Molverhältnis Ti : B von etwa 1 : 1.

Die Herstellung der Copolymere aus Ethylen und $\alpha$-Olefin mittels "Single-Site"-Katalysatoren ist in der Technik der Polyolefine vorbekannt. Es wird z.B. auf den Abschnitt 3.3.3 des Kapitels "Aluminium Compounds, Organic" aus "Ullmann's Encyclopedia of Industrial Chemistry Sixth Edition 1999 Electronic Release" (englisch), sowie auf die darin zitierte Literatur verwiesen. Repräsentative Herstellungsbeispiele für Ethylen-$\alpha$-Olefin-Copolymere, wie sie in den erfindungsgemässen Riemen eingesetzt werden, sind die Beispiele 4, 5 und 11-77 von EP-A-0 416 815 und die Beispiele 1-4 von US-A-5 272 236.

Beispiele von handelsüblichen Copolymeren aus Ethylen und $\alpha$-Olefinen, welche mittels Metallocen "Single Site"-Katalysatoren synthetisiert wurden und die in den erfindungsgemässen Riemen einsetzbar sind, sind Affinity ® und Engage ® von Du Pont-Dow Elastomers oder Exact ® und Exceed ® von DEX-Plastomers.

Die erfindungsgemässen Riemen bestehen aus einem Thermoplasten, der mindestens 70 Gewichtsprozente des Ethylen-$\alpha$-Olefin-Copolymers umfasst. Vorzugsweise enthält der Thermoplast mindestens 90 Gewichtsprozente des Copolymers und besonders bevorzugt besteht der Thermoplast zu 100 Gewichtsprozenten aus dem Copolymer.

Weitere Bestandteile des Thermoplasten neben dem Copolymer können andere thermoplastische Polymere wie etwa TPE-O, beispielsweise EVA, EEA, EBA und EMA, und PP sein.

Gewünschtenfalls können dem Thermoplasten neben dem Copolymer und den fakultativen weiteren thermoplastischen Polymeren Zusätze oder Additive zugemischt werden. Hierzu gehören beispielsweise:

a) Hilfsmittel für die Verarbeitung wie Gleitmittel, Antiblockmittel, Trennmittel; Antistatika; Treibmittel; Nukleierungsmittel;

b) Hilfsmittel zur Verbesserung der Eigenschaften der Fertigprodukten wie zum Beispiel UV- und Temperaturstabilisatoren; Flammschutzmittel; Farbmittel; Haftvermittler; antibakterielle oder schimmeltötende Zusätze; und

c) Füllstoffe als Streckmittel zur Einsparung von Kunststoffen und dadurch zur Kostensenkung und/oder zur Verbessern der Verarbeitbarkeit und der Eigenschaften wie Steifigkeit, Schlagzähigkeit, Wärmestandfestigkeit, elektrische Leitfähigkeit und Masshaltigkeit und/oder zur Verringern die thermische Ausdehnung. Insbesondere erhöhen längliche oder faserförmige Zusatzstoffe die Festigkeit.

Die erfindungsgemässen Riemen, Transportbänder bzw. Antriebsriemen können in Analogie zu den vorbekannten, Thermoplaste enthaltenden, Riemen, Transportbändern bzw. Antriebsriemen mit Thermoplasten hergestellt werden. Es wird auf die Kapitel 3.2.4, 3.2.5 und 3.2.6. von Saechtling, Kunststofftaschenbuch, 27. Ausgabe, Carl Hanser Verlag München verwiesen.

Durch entsprechende Materialwahl und passende Prozessführung können strukturierte Oberflächen erzeugt werden. Durch bewusst erzeugten Schmelzebruch können mit den erwähnten Copolymeren auch bei erfindungsgemässen Antriebsriemenriemen strukturierte Oberflächen erzeugt werden. Der Schmelzebruch wird dadurch erzeugt, dass die Temperatur der Düse relativ tief gehalten wird, der Massedurchsatz genügend hoch ist und dass die Düse eine scharfkantige Austrittsöffnung aufweist. Die Strukturierung (Rauhheit) der Riemenoberfläche lässt sich bei erfindungsgemässen Antriebsriemen mit der maximalen Profilhöhe $R_y$ nach DIN 4762 charakterisieren. Die Vermessung des Profils der Oberfläche geschieht dabei zweckmässigerweise, indem eine Probe des erfindungsgemässen Riemens durchgeschnitten und der Profilquerschnitt durch ein Mikroskop in einem bekannten Vergrösserungsmassstab fotografiert wird. Durch Ausmessen in der Fotografie und Umrechnen mittels des Vergrösserungsmassstabes lassen sich die für die obigen Norm benötigten Dimensionen und Parameter der Oberfläche (Mittellinie der kleinsten Abweichungsquadrate, Abstand des höchsten Punktes des Profils von der Mittellinie, Rp, und Abstand des tiefsten Punktes von der Mittellinie,

$R_m$) bestimmen. Bevorzugt weisen erfindungsgemässe Riemen eine maximale Profilhöhe $R_y$ von 20 bis 250 $\mu$m, besonders bevorzugt von 70 bis 140 $\mu$m auf.

Die Copolymere, die in den erfindungsgemässen Riemen verwendet werden, insbesondere die oben erwähnten Handelsprodukte, sind teilweise gemäss FDA 21 CFR 177.1520, "Olefin Polymers" par.(c) 3.1 b für den Kontakt mit Lebensmitteln zugelassen. Erfindungsgemässe Transportbänder mit solchen Copolymeren können entsprechend in der Lebensmittelindustrie eingesetzt werden.

Die erfindungsgemässen monolithischen Riemen, insbesondere Transportbänder und Antriebsriemen, sind, da in ihnen Ethylen-$\alpha$-Olefincopolymere mit den erwähnten günstigen Werten für Kriechgeschwindigkeit und Speichermodul E' verwendet werden, hinsichtlich Festigkeit unter Zugbeanspruchung und Flexibilität vergleichbar zu analogen vorbekannten monolithischen Riemen, so dass es auch bei relativ kleinen Scheibendurchmessern nicht zu Rissbildung kommt.

Bei den erfindungsgemässen Transportbändern und Antriebsriemen können Endverbindungen bei Temperaturen um 120°C ausgeführt werden. Dadurch können Standardpressen verwendet werden, welche auch bei der Herstellung von Endverbindungen von leichten Transportbänder mit mehrlagigem Aufbau zum Einsatz kommen. Die resultierenden Bänder und Riemen sind äusserst resistent gegenüber Hydrolyse.

Die erfindungsgemässen monlithischen Riemen, insbesondere Transportbänder und Antriebsriemen, zeichnen sich gegenüber entsprechenden vorbekannten Bändern und Riemen auch durch geringe Materialkosten aus: Die Rohmaterialkosten werden um mindestens 50% reduziert.

Erfindungsgemässe Transportbänder und Antriebsriemen weisen gegenüber Transportbändern und Antriebsriemen mit Copolymeren mit $M_w : M_n$ grösser als 5.0 . 1 die Vorteile auf, dass sie geringere extrahierbare Anteile aufweisen, so dass sie eine höhere Wärmestandfestigkeit erreichen.

Die Erfindung wird nun durch die folgenden Beispiele weiter veranschaulicht. Diese dienen nur zur Illustration, nicht aber zur Einschränkung des Schutzumfangs.

**Beispiel 1:**

Es wurde die Kriechgeschindigkeiten $v_k$ eines erfindungsgemäss einsetzbaren Ethylen-$\alpha$-Olefin-Copolymers (Exact 0203, DEX Plastomers, 6401 Heerlen, NL), und, zum Vergleich, eines Low-Density-Polyethylens (Polyethylene 410R, Dow Plastics, CH-8810, Horgen, Schweiz) sowie eines thermoplastischen Polyolefin-Elastomers (Milastomer 9020 N, Mitsui Petrochemical Industries, Tokio, Japan) gemessen. Es wurde jeweils ein Probenkörper von 6,0 x 2,0 x 255 mm vermessen. Jedes der drei Materialien wurde bei 30°C, 40°C und 50°C gemessen, wobei jedesmal ein neuer Probenkörper verwendet wurde.

Zur Durchführung einer Messung wurde der Probenkörper in den Probenhalter für Zugversuche einer Messapparatur (TA Instruments Dynamic Mechanical Analyzer 2980) eingespannt. Der Probenkörper wurde bei geschlossener Messkammer der Messapparatur während 10 Minuten bei der gewählten Prüftemperatur thermostatisiert. Die Temperatur während des Thermostatisierens und der eigentlichen Messung wurde mit einer Genauigkeit von $\pm$ 0,1°C eingehalten. Nach dem Thermostatisieren wurde der Probenkörper mit der maximal von der Messapparatur möglichen Geschwindigkeit einer Zugspannung 1,20 MPa ausgesetzt. Diese Zugspannung wurde während 100 Minuten konstant gehalten. Während der gesamten Prüfdauer wurde die Länge des Probenkörpers mit einer Genauigkeit von $10^{-5}$ mm aufgezeichnet. Danach wurde die Probe schlagartig entlastet (Zugspannung 0,01 MPa) und die Temperatur während weiteren 10 Minuten konstant gehalten.

Zur Auswertung wurde die Länge des Probenkörpers gegen den dekadischen Logarithmus der Zeit aufgetragen. Im quasi linearen Bereich der so entstandenen Kurve wurde die Kriechgeschwindigkeit $V_k$:

$$v_k = (\varepsilon_1 - \varepsilon_0) / (\log t_1 - \log t_0), \quad [v_k] = 1 / \log(\text{min})$$

als Steigung der Kurve bestimmt. In der obigen Formel bedeutet $t_0$ die Zeit zu Beginn des quasi linearen Bereichs der Kurve, $t_1$ ist 100 min, $\varepsilon_0$ ist die Dehnung des Probenkörpers zum Zeitpunkt $t_0$ und $\varepsilon_1$ ist die Dehnung des Probenkörpers zum Zeitpunkt $t_1$.

Es wurden folgende Messwerte für $V_k$ (in 1 / log(min)) erhalten:

| Temp.(°C) | Exact 0203 | PE 410R | Milastomer 9020N |
|---|---|---|---|
| 30 | 0,00293 | 0,00512 | 0,04106 |
| 40 | 0,00619 | 0,00676 | 0,06396 |

Tabelle fortgesetzt

| Temp.(°C) | Exact 0203 | PE 410R | Milastomer 9020N |
|---|---|---|---|
| 50 | 0,01181 | 0,00649 | 0,08816 |

Die Kriechgeschwindigkeit des Ethylen-α-Olefin-Copolymers Exact 0203 ist bis zu 20mal geringer als diejenige des Elastomers 9020N und liegt im selben Bereich wie die Kriechgeschwindigkeit des Polyethylens PE 410R, wobei aber letzteres für die Herstellung eines monolithischen Riemens viel zu steif ist.

**Beispiel 2**

Es wurde der Speichermodul E' derselben Polymere wie in Beispiel 1 gemessen. Dieser Speichermodul hängt mit dem komplexen Elastizitätsmodul E* wie folgt zusammen:

$$E^* = E' + i \cdot E'',$$

wobei E " I der Verlustmodul ist. E' und E " sind also Real- bzw- Imaginärteile des Elastititätsmoduls E*.

Für die Messung von E' wurde jeweils ein Probenkörper mit denselben Abmessungen verwendet wie in Beispiel 1. Hierzu wurde der Probenkörper in den Probenhalter für Zugversuche einer Messapparatur (TA Instruments Dynamic Mechanical Analyzer 2980) eingespannt. Der Probenkörper wurde zunächst mit einer Rate 3 °C/min von Raumtemperatur auf -50°C abgekühlt und während 10 Minuten konstant bei dieser Temperatur belassen. Danach wurde der Probenkörper mit einer Rate von 2 °C/min auf +80°C aufgeheizt. Während der gesamten Dauer wurde der Probenkörper einer zyklischen, sinusförmigen Dehnung mit einer Amplitude von 5 μm und einer Frequenz von 10 Hz unterworfen, wobei permanent der Speichermodul E' gemessen wurde.

Es wurden für drei exemplarische Temperaturen (30°C, 40°C und 50°C) aus der Aufheizungsperiode die folgenden Werte für den Speichermodul E' (in MPa) erhalten:

| Temp.(°C) | Exact 0203 | PE 410R | Milastomer 9020N |
|---|---|---|---|
| 30 | 105 | 475 | 102 |
| 40 | 85 | 364 | 84 |
| 50 | 56 | 261 | 67 |

Das Ethylen-α-Olefin-Copolymer Exact 0203 weist gegenüber dem Polyethylen PE 410R einen 4 bis 5 mal geringeren Speichermodul E' auf. Der Speichermodul des Elastomers 9020N ist zwar vergleichbar mit demjenigen des Copolymers, das Elastomer ist aber wesentlich weniger kriechfest als das Ethylen-α-Olefin-Copolymer (siehe Beispiel 1).

**Beispiel 3:**

Mit einem Einschnecken-Extruder (Hersteller Maillefer), welcher mit einer Barriereschnecke und mit einer Runddüse mit einem Innendurchmesser von 7.0 mm bestückt war, wurde ein Rundriemen aus einem Copolymer von Ethylen und 1-Okten, welches mit Hilfe von Metallocen -Katalysatoren synthetisiert worden war und eine Dichte von 0.902 g/m$^3$ aufwies (Typ Exact ® 0203, Hersteller DEX-Plastomers), gemäss dem Stand der Technik hergestellt. Die Massetemperatur im Extruder betrug 190°C. Durch Kühlung der Düse auf 178°C und durch die Verwendung einer sehr scharfkantigen Lochdüse wurde bewusst Schmelzbruch erzeugt. Dadurch entstand ein rauhe Oberfläche mit einer maximalen Profilhöhe Ry nach DIN 4762 von etwa 140 μm.

Der Riemen hatte einen Durchmesser von 7.0 mm und wies folgende Eigenschaften auf:

| | |
|---|---|
| Kraft bei 1% Dehnung: | 26.4 N |
| Spannung bei Dehnung von 1% | 0.68 MPa |
| Dehnung nach 48 h Zugspannung von 1.12 MPa | 2.6% |
| Bleibende Dehnung nach 48 h bei 1.12 MPa | 0.2% |

Sowohl die Dehnung nach 48 Stunden unter Zugbelastung als auch die bleibende Dehnung sind kleiner oder gleich wie bei einem vergleichbaren Rundriemen aus TPE-U.

**Beispiel 4:**

Mit einem konventionellen Einschnecken-Extruder (Hersteller Maillefer), ausgerüstet mit einer Barriereschnekke und einer Breitschlitzdüse, wurde ein monolithisches Transportband aus einem Copolymer von Ethylen und 1-Okten, welches mit Hilfe von Metallocen -Katalysatoren synthetisiert wurde und eine Dichte von 0.902 g/m$^3$ aufwies (Typ Exact® 0203. Hersteller DEX-Plastomers), gemäss dem Stand der Technik hergestellt. Das Band hatte eine Dicke von 2.0 mm. Es wies folgende Eigenschaften auf:

| | |
|---|---|
| Kraft bei 1% Dehnung | 1.63 N/mm |
| Kraft bei 1% Dehnung relaxiert (EN 1723) | 1.20 N/mm |
| bleibende Dehnung (EN 1723) | 0.20 % |

Das Band liess sich bei 120°C mit den bekannten Techniken endverbinden. Es ist gemäss FDA 21 CFR 177.1520, "Olefin Polymers" par.(c) 3.1 b bis zu einer Temperatur von 65°C zugelassen für den Kontakt mit allen Arten von Lebensmitteln. Das Band ist gegenüber heissem Wasser bis zu 90°C beständig.

**Patentansprüche**

1. Monolithischer Riemen, **dadurch gekennzeichnet, dass** er aus einem Thermoplasten besteht, der mindestens 70 Gewichtsprozente eines unvernetzten Copolymeren von Ethylen und einem α-Olefin umfasst, und das Copolymer ein Verhältnis von Gewichtsmittel $M_w$ zu Zahlenmittel $M_n$ von 5,0 : 1 bis 1,5 . 1 aufweist.

2. Riemen nach Anspruch 1, **dadurch gekennzeichnet, dass** das Copolymer ein Verhältnis $M_w$: $M_n$ von 3,5 : 1 bis 1,5 : 1 aufweist.

3. Riemen nach Anspruch 2, **dadurch gekennzeichnet, dass** das Copolymer ein Verhältnis $M_w$ : $M_n$ von 2,5 : 1 bis 1,5 : 1 aufweist.

4. Riemen nach einem der Ansprüche 1 bis 3, **dadurch gekennzeichnet, dass** das Copolymer mittels eines "Single-Site"-Katalysators hergestellt ist.

5. Riemen nach Anspruch 4, **dadurch gekennzeichnet, dass** der "Single-Site"-Katalysator (tert-Butylamido)dimethyl (tetramethyl-η$^5$-cyclopentadienyl)silantitandimethyl + Tris(pentafluorphenyl)boran im Molverhältnis Ti : B von 1 : 1 ist.

6. Riemen nach einem der Ansprüche 1 bis 5, **dadurch gekennzeichnet, dass** der Thermoplast mindestens 90 Gewichtsprozente des Copolymers umfasst.

7. Riemen nach Anspruch 6, **dadurch gekennzeichnet, dass** der Thermoplast zu 100 Gewichtsprozenten aus dem Copolymer besteht.

8. Riemen nach einem der Ansprüche 1 bis 7, **dadurch gekennzeichnet, dass** das α-Olefin 5 bis 10 Kohlenstoffatome aufweist.

9. Riemen nach Anspruch 8, **dadurch gekennzeichnet, dass** das α-Olefin 1-Octen ist.

10. Riemen nach einem der Ansprüche 1 bis 9, **dadurch gekennzeichnet, dass** er aus einem Thermoplasten besteht, der ein Copolymer umfasst, das für den Kontakt mit Lebensmittel zugelassen ist.

11. Riemen nach einem der Ansprüche 1 bis 10, in Form eines monolithischen Antriebsriemens oder monolithischen Transportbandes.

12. Transportband nach Anspruch 11, **dadurch gekennzeichnet, dass** es einseitig mit einem Gewebe oder Vlies belegt ist.

13. Antriebsriemen nach Anspruch 11, **dadurch gekennzeichnet, dass** er ein Profilriemen mit Form eines Rundriemens, Keilriemens, Doppelkeilriemens, Spitzkeilriemens oder Flachriemens ist.

14. Antriebsriemen nach Anspruch 11 oder 13, **dadurch gekennzeichnet, dass** er eine Oberfläche mit einer maximalen Profilhöhe Ry nach DIN 4762 von 20 bis 250 $\mu$m aufweist.

15. Verwendung eines unvernetzten Copolymeren von Ethylen und einem $\alpha$-Olefin mit einem Verhältnis von Gewichtsmittel $M_w$ zu Zahlenmittel $M_n$ von 5,0 : 1 bis 1,5 : 1, zur Herstellung eines monolithischen Riemens mit mindestens 70 gewichbprezenten dieses Copolymeren.

16. Verwendung nach Anspruch 15, **dadurch gekennzeichnet, dass** das Copolymer mittels eines "Single-Site"-Katalysators hergestellt ist.

**Claims**

1. Monolithic belt, **characterised in that** it consists of a thermoplastic material, comprising at least 70 percent by weight of a non-crosslinked copolymer of ethylene and a $\alpha$-olefin, and that the copolymer has a ratio of weight average molecular weight $M_w$ to number average molecular weight $M_n$ of 5.0: 1 to 1.5: 1.

2. Belt according to claim 1, **characterised in that** the copolymer has a ratio $M_w : M_n$ of 3.5 : 1 to 1.5 : 1.

3. Belt according to claim 2, **characterised in that** the copolymer has a ratio $M_w : M_n$ of 2.5 : 1 to 1.5 : 1.

4. Belt according to any one of claims 1 to 3, **characterised in that** the copolymer is produced by means of a "single-site" catalyst.

5. Belt according to claim 4, **characterised in that** the "single-site" catalyst is (tert-butylamido)dimethyl (tetramethyl-$\eta^5$-cyclopentadienyl)silanetitaniumdimethyl + tris(pentafluorophenyl)borane in molar ratio Ti : B of 1 : 1.

6. Belt according to any one of claims 1 to 5, **characterised in that** the thermoplastic material comprises at least 90 percent by weight of copolymer.

7. Belt according to claim 6, **characterised in that** the thermoplastic material consists of 100 percent by weight of copolymer.

8. Belt according to any one of claims 1 to 7, **characterised in that** the $\alpha$-olefin has 5 to 10 carbon atoms.

9. Belt according to claim 8, **characterised in that** the $\alpha$-olefin is 1-octene.

10. Belt according to any one of claims 1 to 9, **characterised in that** it consists of a thermoplastic material, comprising a copolymer that is authorised for use in contact with foodstuffs.

11. Belt according to any one of claims 1 to 10, **characterised in that** it is in the form of a monolithic drive belt or monolithic conveyor belt.

12. Conveyor belt according to claim 11, **characterised in that** is covered on one side with a woven fabric or non-woven fabric.

13. Drive belt according to claim 11, **characterised in-**that it is a profiled belt with a form of a round belt, V-belt, double V-belt, ridge top belt, or flat belt.

14. Drive belt according to claim 11 or 13, **characterised in that** it has a surface with a maximum profile height Ry according to DIN 4762 of 20 to 250 $\mu$m.

15. Use of a non-crosslinked copolymer of ethylene and a $\alpha$-olefin with a ratio of weight average molecular weight $M_w$

to number average molecular weight $M_n$ of 5.0 : 1 to 1.5 : 1, for the production of a monolithic belt comprising at least 70 percent by weight of this copolymer.

**16.** Use according to claim 15, **characterised in that** the copolymer is produced by means of a "single-site" catalyst.

## Revendications

**1.** Courroie monolithique, **caractérisée en ce qu'**elle est constituée d'une matière thermoplastique qui comprend au moins 70 % en poids d'un copolymère non réticulé d'éthylène et d'une alpha-oléfme, et le copolymère présente un rapport de la masse moléculaire moyenne en poids $M_w$ à la masse moléculaire moyenne en nombre $M_n$ de 5,0 : 1 à 1,5 : 1.

**2.** Courroie selon la revendication 1, **caractérisée en ce que** le copolymère présente un rapport $M_W : M_n$ de 3,5 : 1 à 1,5 : 1.

**3.** Courroie selon la revendication 2, **caractérisée en ce** le copolymère présente un rapport $M_W : M_n$ de 2,5 : 1 à 1,5 : 1.

**4.** Courroie selon l'une quelconque des revendications 1 à 3, **caractérisée en ce que** le copolymère est fabriqué au moyen d'un catalyseur "single-site".

**5.** Courroie selon la revendication 4, **caractérisée en ce que** le catalyseur "single-site" est le (tert-butylamido)diméthyl (tétraméthyl-$\eta^5$-cyclopentadiényl)-silane-titane-diméthyle + tris(pentafluorophényl)borane en un rapport molaire Ti : B de 1 : 1.

**6.** Courroie selon l'une quelconque des revendications 1 à 5, **caractérisée en ce que** la matière thermoplastique comprend au moins 90 % en poids du copolymère.

**7.** Courroie selon la revendication 6, **caractérisée en ce que** la matière thermoplastique est constituée de 100 % en poids du copolymère.

**8.** Courroie selon l'une quelconque des revendications 1 à 7, **caractérisée en ce que** l'alpha-oléfine présente 5 à 10 atomes de carbone.

**9.** Courroie selon la revendication 8, **caractérisée en ce que** l'alpha-oléfine est le 1-octène.

**10.** Courroie selon l'une quelconque des revendications 1 à 9, **caractérisée en ce qu'**elle est constituée d'une matière thermoplastique qui comprend un copolymère qui est autorisé pour le contact avec des aliments.

**11.** Courroie selon l'une quelconque des revendications 1 à 10, sous la forme d'une courroie de transmission monolithique ou d'une bande transporteuse monolithique.

**12.** Bande transporteuse selon la revendication 11, **caractérisée en ce qu'**elle est recouverte d'un côté d'un tissu ou d'un feutre.

**13.** Courroie de transmission selon la revendication 11, **caractérisée en ce qu'**elle est une courroie profilée se présentant sous la forme d'une courroie circulaire, d'une courroie trapézoïdale, d'une courroie trapézoïdale double, d'une courroie pointue ou d'une courroie plate.

**14.** Courroie de transmission selon la revendication 11 ou 13, **caractérisée en ce qu'**elle présente une surface avec une hauteur maximale de profil $R_y$ selon la norme DIN 4762 de 20 à 250 $\mu$m.

**15.** Utilisation d'un copolymère non réticulé d'éthylène et d'une alpha-oléfine avec un rapport de la masse moléculaire moyenne en poids $M_w$ à la masse moléculaire moyenne en nombre $M_n$ de 5,0 : 1 à 1,5 : 1, pour la fabrication d'une courroie monolithique avec au moins 70 % en poids de ce copolymère.

**16.** Utilisation selon la revendication 15, **caractérisée en ce** le copolymère est fabriqué au moyen d'un catalyseur "single-site".

Fig. 1

a)

b)

c)

d)

e)